# EUROPEAN PATENT APPLICATION

(11) **EP 4 071 198 A1**
(43) Date of publication of application: **12.10.2022**
(21) Application number: 20896578.0
(22) Date of filing: 27.11.2020
(51) Int. Cl.: C08G 69/18, C08G 69/20

(54) **METHOD FOR PRODUCING POLYAMIDE THROUGH ANIONIC POLYMERIZATION, AND POLYAMIDE PREPARED THEREBY**

(30) Priority: 06.12.2019 KR 20190161889
(71) Applicant: Hanwha Solutions Corporation, Jung-gu Seoul 04541 (KR)
(72) Inventor: LEE, Hye Yeon, Daejeon 34128 (KR); LEE, Jinseo, Daejeon 34128 (KR); KWON, Kyungho, Daejeon 34128 (KR); DO, Seung Hoe, Daejeon 34128 (KR); KIM, Dokyoung, Daejeon 34128 (KR)
(74) Representative: HGF
(86) International application number: PCT/KR2020/017021
(87) International publication number: WO 2021/112495

(57) **Abstract**

The present invention relates to a process for preparing a polyamide by anionic polymerization and to a polyamide prepared thereby. A polyamide having an ultra-high molecular weight can be easily prepared by the process for preparing a polyamide according to an embodiment of the present invention. In addition, the polyamide having an ultra-high molecular weight according to an embodiment of the present invention has excellent mechanical properties, particularly, impact resistance. Accordingly, the polyamide having an ultra-high molecular weight according to an embodiment of the present invention may be advantageously used as a material for parts selected from the group consisting of materials for automobiles, materials for electronic devices, materials for industrial pipes, materials for architectural and civil engineering, materials for 3D printers, textile materials, cloth materials, materials for machine tools, medical materials, aviation materials, solar materials, battery materials, materials for sports, materials for home appliances, materials for home use, and materials for cosmetics.

## Description

### Technical Field

The present invention relates to a process for preparing a polyamide by anionic polymerization and to a polyamide prepared thereby. Specifically, the present invention relates to a process for preparing a polyamide having an ultra-high molecular weight by anionic polymerization and to a polyamide having an ultra-high molecular weight prepared by the process.

### Background Art

A polyamide refers to a polymer that comprises an amide (-CO-NH-) unit in its main chain. A polyamide may be prepared from two different monomer units of bifunctionality, each containing two identical reactive groups (e.g., -NH₂ or -COOH). Alternatively, it may be prepared from one monomer unit of bifunctionality, each containing one amino group and one carboxyl group or capable of forming these groups. For example, a polyamide may be prepared by a polycondensation reaction of a diamine and a dicarboxylic acid, a polycondensation reaction of an aminocarboxylic acid, or a ringopening polymerization of a lactam.

Polyamides may be classified into aliphatic polyamides, aromatic polyamides, and alicyclic polyamides according to their molecular structure. Aliphatic polyamides are commonly called nylon, and aromatic polyamides are commonly called Aramid.

In general, polyamides are excellent in physical properties such as rigidity, friction resistance, abrasion resistance, oil resistance, and solvent resistance, and are readily meltmolded. Thus, they are widely used as materials for clothing, textiles for industrial materials, and engineering plastics.

Meanwhile, when a polyamide is prepared by a conventional anionic polymerization, it is in reality difficult to prepare a polyamide having a weight average molecular weight exceeding 100,000 g/mole. For example, Korean Laid-open Patent Publication No. 10-2019-0061898 discloses a process for preparing a polyamide by anionic polymerization in the presence of a molecular weight modifier having dual active groups. The polyamide produced by this process has a weight average molecular weight in the range of 20,000 to 100,000 g/mole.

If an attempt is made to increase the molecular weight of a polyamide by simply increasing the polymerization time in the conventional process for preparing a polyamide by anionic polymerization, gelation may take place.

Accordingly, there is a need for a process for preparing a polyamide having an ultra-high molecular weight while gelation is prevented.

### Disclosure of the Invention

### Technical Problem

An object of the present invention is to provide a process for preparing a polyamide having an ultra-high molecular weight by anionic polymerization.

Another object of the present invention is to provide a polyamide having an ultra-high molecular weight prepared by the process.

### Solution to the Problem

According to an embodiment for achieving the object of the present invention, there is provided a process for preparing a polyamide, which comprises subjecting a lactam to anionic polymerization in the presence of a polymerization catalyst, an activator, and a molecular weight modifier to prepare a polyamide having a weight average molecular weight of 100,000 to 200,000 g/mole, wherein the content of the activator is 0.002 to 20 parts by weight, and the content of the molecular weight modifier is 0.01 to 10 parts by weight, based on 100 parts by weight of the total lactam.

Specifically, the lactam may comprise at least one selected from the group consisting of laurolactam, caprolactam, piperidinone, pyrrolidone, enantolactam, and capryllactam. Preferably, the lactam may be laurolactam, caprolactam, or a mixture thereof.

In addition, the lactam may further comprise at least one selected from the group consisting of propiolactam, valerolactam, heptanolactam, octanolactam, nonanolactam, decanolactam, undecanolactam, and dodecanolactam.

The polymerization catalyst may comprise, as an alkali metal, at least one selected from the group consisting of a metal hydride, a metal hydroxide, and a metal alkoxide. Preferably, the polymerization catalyst may be a metal hydride. More preferably, the polymerization catalyst may be sodium hydride.

Preferably, the polymerization catalyst may further comprise a silica-based compound represented by Formula 1 below.

[Formula 1] Si-(R)n

In Formula 1, n is a natural number of 1 to 4, and R is at least one selected from hydrogen, alkyl, alkoxy, and aromatic, wherein the alkyl and the alkoxy each have 1 to 12 carbon atoms.

Preferably, the silica-based compound may comprise at least one selected from the group consisting of organic silicates, inorganic silicates, silane, silica, and silica gel.

In a specific embodiment of the present invention, the total content of the polymerization catalyst may be 0.001 to 20 parts by weight based on 100 parts by weight of the total lactam.

Meanwhile, the activator may comprise at least one selected from the group consisting of carbon dioxide (CO₂), benzoyl chloride, N-acetyl caprolactam, N-acetyl laurolactam, and octadecyl isocyanate (ODI), each of which has a single active group, and toluene diisocyanate (TDI), hexamethylene diisocyanate (HDI), isophthaloyl-bis-laurolactam (IBL), and isophthaloyl-bis-caprolactam (ICL), each of which has dual active groups. Preferably, the activator may be carbon dioxide, toluene diisocyanate, or octadecyl isocyanate.

In addition, the molecular weight modifier may comprise at least one selected from the group consisting of ethylene-bis-stearamide (EBS), amine compounds, urea compounds, and di-urea compounds. Preferably, the molecular weight modifier may be ethylene-bis-stearamide.

In a specific embodiment of the present invention, the anionic polymerization of the lactam may be carried out for 0.5 to 180 minutes.

In addition, the anionic polymerization of the lactam may be carried out in a temperature range of 180 to 300°C.

According to another embodiment of the present invention, there is provided a polyamide prepared by the process and having a weight average molecular weight of 100,000 to 200,000 g/mole.

The polyamide according to an embodiment of the present invention may be used as a material for parts selected from the group consisting of materials for automobiles, materials for electronic devices, materials for industrial pipes, materials for architectural and civil engineering, materials for 3D printers, textile materials, cloth materials, materials for machine tools, medical materials, aviation materials, solar materials, battery materials, materials for sports, materials for home appliances, materials for home use, and materials for cosmetics.

### Advantageous Effects of the Invention

The process for preparing a polyamide according to an embodiment of the present invention can easily provide a polyamide having an ultra-high molecular weight.

The polyamide having an ultra-high molecular weight according to an embodiment of the present invention has excellent mechanical properties, particularly, impact resistance.

### Brief Description of the Drawings

Fig. 1 is a graph showing the polymerization rates and torque values of the polyamides of Examples 1 and 2 and Comparative Example 1.
Fig. 2 shows the impact strength at room temperature of molded articles prepared from the polyamides of Example 1 and Comparative Example 1.

### Best Embodiment for Carrying out the Invention

Hereinafter, the present invention will be described in more detail.

According to an embodiment of the present invention, there is provided a process for preparing a polyamide, which comprises subjecting a lactam to anionic polymerization in the presence of a polymerization catalyst, an activator, and a molecular weight modifier to prepare a polyamide having a weight average molecular weight of 100,000 to 200,000 g/mole, wherein the content of the activator is 0.002 to 20 parts by weight, and the content of the molecular weight modifier is 0.01 to 10 parts by weight, based on 100 parts by weight of the total lactam.

### Monomer

The polyamide according to an embodiment of the present invention is prepared by anionic polymerization of a lactam. Thus, the lactam is used as a monomer to prepare the polyamide. Specifically, a lactam contains 4 to 12 carbon atoms in its ring. It may comprise at least one selected from the group consisting of laurolactam, caprolactam, piperidinone, pyrrolidone, enantolactam, and capryllactam, but it is not particularly limited thereto. Preferably, the lactam may be laurolactam, caprolactam, or a mixture thereof.

In addition, the lactam may further comprise at least one selected from the group consisting of propiolactam, valerolactam, heptanolactam, octanolactam, nonanolactam, decanolactam, undecanolactam, and dodecanolactam, but it is not particularly limited thereto.

### Polymerization catalyst

Here, the polymerization catalyst is a compound that allows the formation of anions of a lactam as a monomer. Specifically, the polymerization catalyst may comprise, as an alkali metal, at least one selected from the group consisting of a metal hydride, a metal hydroxide, and a metal alkoxide.

For example, the metal hydride may comprise sodium hydride and potassium hydride, the metal hydroxide may comprise sodium hydroxide and potassium hydroxide, and the metal alkoxide may comprise potassium tert-butoxide and aluminum isopropoxide.

More specifically, the polymerization catalyst may comprise at least one selected from the group consisting of sodium caprolactamate, potassium caprolactamate, caprolactam magnesium bromide, caprolactam magnesium chloride, magnesium biscaprolactamate, sodium hydride, sodium metal, sodium hydroxide, sodium methoxide, potassium ethoxide, sodium propoxide, sodium butoxide, potassium hydride, potassium metal, potassium hydroxide, potassium methoxide, potassium ethoxide, potassium propoxide, and potassium butoxide, but it is not particularly limited thereto.

Preferably, the polymerization catalyst may be a metal hydride. More preferably, the polymerization catalyst may be sodium hydride.

In a specific embodiment of the present invention, the polymerization catalyst may optionally further comprise a silica-based compound represented by Formula 1 below.

[Formula 1] Si-(R)n

In Formula 1, n is a natural number of 1 to 4, and R is at least one selected from hydrogen, alkyl, alkoxy, and aromatic, wherein the alkyl and the alkoxy each have 1 to 12 carbon atoms.

In a specific embodiment of the present invention, the silica-based compound may comprise at least one selected from the group consisting of organic silicates, inorganic silicates, silane, silica, and silica gel, but it is not particularly limited thereto.

Such a polymerization catalyst may be used in the form of a solid or a solution. It is preferable to use the polymerization catalyst in the form of a solid. The polymerization catalyst is preferably added to a melt of laurolactam in which the catalyst can be dissolved. The polymerization catalyst gives rise to a particularly rapid reaction, which makes it possible to increase the efficiency of the process for preparing a polyamide according to the present invention.

In a preferred embodiment of the present invention, the total content of the polymerization catalyst may be 0.001 to 20 parts by weight based on 100 parts by weight of the total lactam. The total content of the polymerization catalyst may be, preferably, 0.005 to 10 parts by weight, more preferably, 0.01 to 5 parts by weight, based on 100 parts by weight of the total lactam. If the polymerization catalyst is used in an amount of less than 0.001 part by weight, there may be a problem in that the polymerization is not sufficiently carried out or that the reaction rate is lowered. If the polymerization catalyst is used in an amount exceeding 20 parts by weight, the molecular weight of a polyamide thus prepared may be decreased.

### Activator

In the present invention, the activator serves to enhance the molecular weight of a polyamide and polymerization rate. It, together with a molecular weight modifier, prevents gelation during polymerization, thereby making it possible to prepare a polyamide having an ultra-high molecular weight.

In a specific embodiment of the present invention, the activator may comprise at least one selected from the group consisting of carbon dioxide (CO₂), benzoyl chloride, N-acetyl caprolactam, N-acetyl laurolactam, and octadecyl isocyanate (ODI), each of which has a single active group, and toluene diisocyanate (TDI), hexamethylene diisocyanate (HDI), isophthaloyl-bis-laurolactam (IBL), and isophthaloyl-bis-caprolactam (ICL), each of which has dual active groups, but it is not particularly limited thereto. Preferably, the activator may be carbon dioxide, toluene diisocyanate, or octadecyl isocyanate.

In a preferred embodiment of the present invention, the content of the activator may be 0.002 to 20 parts by weight based on 100 parts by weight of the total lactam. The content of the activator may be, preferably, 0.005 to 10 parts by weight, more preferably, 0.01 to 5 parts by weight, based on 100 parts by weight of the total lactam. If the activator is used in an amount of less than 0.002 part by weight, there may be a problem in that polymerization is not sufficiently carried out, resulting in a polyamide having a low molecular weight or that the reaction rate is lowered. If the polymerization catalyst is used in an amount exceeding 20 parts by weight, gelation may take place.

### Molecular weight modifier

In the present invention, the molecular weight modifier serves to adjust the molecular weight of a polyamide. It, together with an activator, prevents gelation during polymerization, thereby making it possible to prepare a polyamide having an ultra-high molecular weight.

In a specific embodiment of the present invention, the molecular weight modifier may comprise at least one selected from the group consisting of ethylene-bis-stearamide (EBS), amine compounds, urea compounds, and di-urea compounds, but it is not particularly limited thereto. Preferably, the molecular weight modifier may be ethylene-bis-stearamide.

In a preferred embodiment of the present invention, the content of the molecular weight modifier may be 0.01 to 10 parts by weight based on 100 parts by weight of the total lactam. The content of the molecular weight modifier may be, preferably, 0.05 to 7 parts by weight, more preferably, 0.1 to 5 parts by weight, based on 100 parts by weight of the total lactam. If the molecular weight modifier is used in an amount of less than 0.01 part by weight, there may be a problem in that gelation (crosslinking, branching reaction) may take place. If the polymerization catalyst is used in an amount exceeding 10 parts by weight, there may be a problem in that the molecular weight of a polyamide thus prepared may be decreased.

### Polymerization conditions

In a specific embodiment of the present invention, the conditions for anionic polymerization of a lactam are not particularly limited. Conditions known in the art to which the present invention pertains may be adopted.

In a preferred embodiment of the present invention, the anionic polymerization of the lactam may be carried out for 0.5 to 180 minutes, but it is not particularly limited thereto. The time for anion polymerization may be appropriately adjusted according to the amount of the compounds to be added and the size and shape of the reactor.

In a preferred embodiment of the present invention, the anionic polymerization of the lactam may be carried out in a temperature range of 180 to 300°C. More preferably, the anionic polymerization of the lactam may be carried out in a temperature range of 200 to 280°C.

### Polyamide

According to another embodiment of the present invention, there is provided a polyamide prepared by the process and having a weight average molecular weight of 100,000 to 200,000 g/mole, preferably, greater than 100,000 g/mole up to 200,000 g/mole.

Since the polyamide according to an embodiment of the present invention has an ultra-high molecular weight, a molded article prepared therefrom has excellent mechanical properties, particularly, impact resistance.

Accordingly, the polyamide according to an embodiment of the present invention may be used as a material for parts selected from the group consisting of materials for automobiles, materials for electronic devices, materials for industrial pipes, materials for architectural and civil engineering, materials for 3D printers, textile materials, cloth materials, materials for machine tools, medical materials, aviation materials, solar materials, battery materials, materials for sports, materials for home appliances, materials for home use, and materials for cosmetics.

### Embodiments for Carrying Out the Invention

### Example

Hereinafter, the present invention will be described in detail with reference to Examples, But the following Examples are intended to illustrate the present invention, and the scope of the present invention is not limited thereto only.

### Example 1

A flask was maintained at 70°C under vacuum to remove moisture in the flask. After the vacuum applied to the flask was released, 50 g of laurolactam (LL), 0.03 g of sodium hydride (NaH), and 0.30 g of ethylene-bis-stearamide (EBS) were added thereto, and the temperature was raised to 165°C under vacuum. The reaction temperature was set to 240°C. While nitrogen gas was added, hydrogen gas generated was removed as the above raw materials were melted. 0.04 g of toluene diisocyanate (TDI) was added thereto, and the reaction was carried out for 20 minutes. After 20 minutes, 50 ml of an aqueous formic acid solution (formic acid:distilled water = 1:1, v/v) was added to the flask to terminate the reaction, and 48 g of a polyamide was obtained.

### Example 2

50 g of a polyamide was prepared in the same manner as in Example 1, except that 0.17 g of TDI was added.

### Example 3

A flask was maintained at 70°C under vacuum to remove moisture in the flask. After the vacuum applied to the flask was released, 50 g of laurolactam (LL), 0.03 g of sodium hydride (NaH), and 0.25 g of ethylene-bis-stearamide (EBS) were added thereto, and the temperature was raised to 165°C under vacuum. The reaction temperature was set to 240°C. While nitrogen gas was added, hydrogen gas generated was removed as the above raw materials were melted. 0.04 g of hexamethylene diisocyanate (HDI) was added thereto, and the reaction was carried out for 30 minutes. After 30 minutes, 50 ml of an aqueous formic acid solution (formic acid:distilled water = 1:1, v/v) was added to the flask to terminate the reaction, and 48 g of a polyamide was obtained.

### Example 4

A flask was maintained at 70°C under vacuum to remove moisture in the flask. After the vacuum applied to the flask was released, 50 g of laurolactam (LL), 0.03 g of sodium hydride (NaH), and 0.25 g of ethylene-bis-stearamide (EBS) were added thereto, and the temperature was raised to 165°C under vacuum. The reaction temperature was set to 240°C. While nitrogen gas was added, hydrogen gas generated was removed as the above raw materials were melted. 0.15 g of octadecyl isocyanate (ODI) was added thereto, and the reaction was carried out for 30 minutes. After 30 minutes, 50 ml of an aqueous formic acid solution (formic acid:distilled water = 1:1, v/v) was added to the flask to terminate the reaction, and 47 g of a polyamide was obtained.

### Example 5

A flask was maintained at 70°C under vacuum to remove moisture in the flask. After the vacuum applied to the flask was released, 50 g of laurolactam (LL), 0.03 g of sodium hydride (NaH), 0.30 g of ethylene-bis-stearamide (EBS), and 0.07 g of tetraethyl orthosilicate (TEOS) were added thereto, and the temperature was raised to 165°C under vacuum. The reaction temperature was set to 240°C. While nitrogen gas was added, hydrogen gas generated was removed as the above raw materials were melted. 0.02 g of carbon dioxide (CO₂) gas was injected thereto, and the reaction was carried out for 30 minutes. After 30 minutes, 50 ml of an aqueous formic acid solution (formic acid:distilled water = 1:1, v/v) was added to the flask to terminate the reaction, and 48 g of a polyamide was obtained.

### Example 6

47 g of a polyamide was prepared in the same manner as in Example 1, except that 0.15 g of CO₂ instead of TDI was added.

### Example 7

49 g of a polyamide was prepared in the same manner as in Example 1, except that 50 g of caprolactam (CL) instead of laurolactam, 0.05 g of NaH, 0.52 g of EBS, and 0.07 g of TDI were used.

### Example 8

48 g of a polyamide was prepared in the same manner as in Example 1, except that 50 g of caprolactam (CL) instead of laurolactam, 0.05 g of NaH, 0.52 g of EBS, and 0.03 g of TDI were used.

### Example 9

47 g of a polyamide was prepared in the same manner as in Example 1, except that 31.8 g of laurolactam, 18.2 g of caprolactam (CL), 0.04 g of NaH, 0.38 g of EBS, and 0.05 g of TDI were used.

### Example 10

46 g of a polyamide was prepared in the same manner as in Example 1, except that 31.8 g of laurolactam, 18.2 g of caprolactam (CL), 0.04 g of NaH, 0.38 g of EBS, and 0.03 g of CO₂ were used.

### Comparative Example 1

50 g of a polyamide was prepared in the same manner as in Example 1, except that TDI was not used.

### Comparative Example 2

46 g of a polyamide was prepared in the same manner as in Example 1, except that EBS was not used.

The reactants of Examples 1 to 5 and Comparative Examples 1 and 2 are shown in Table 1 below.

### Test Example

### (1) Weight average molecular weight (Mw)

The polyamide resins obtained in the Examples and Comparative Examples were measured using GPC and a Brookfield viscometer. TFE was used as the GPC developing solution. The resin was dissolved in an HFIP solution to prepare a sample. The measurement results are shown in Table 1 below.

### (2) Impact resistance

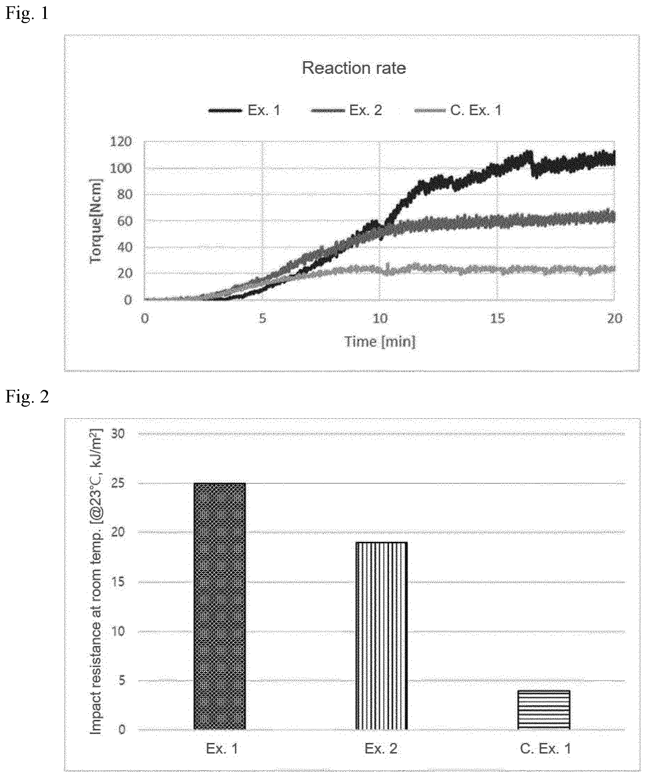

The polyamide resins obtained in the Examples and Comparative Examples were measured for the impact resistance in accordance with the ISO 179/1eA (notched Charpy impact strength) standard. The specimen for measurements was prepared to have a length of 80 mm and a thickness of 10 mm using an injection molding machine. Measurements were carried out at an impact speed of 2.9 m/s in a temperature range of 23 ± 2°C. The measurement results are shown in Fig. 2.

**[Table 1]**

| | Lactam type/content (g) | Catalyst type/content (g) | Activator type/content (g) | Molecular weight modifier type/content (g) | Polyamide Mw (g/mole) |
|---|---|---|---|---|---|
| Ex. 1 | LL/50 | NaH/0.03 | TDI/0.04 | EBS/0.30 | 197,000 |
| Ex. 2 | LL/50 | NaH/0.03 | TDI/0.17 | EBS/0.30 | 160,000 |
| Ex. 3 | LL/50 | NaH/0.03 | HDI/0.04 | EBS/0.25 | 131,000 |
| Ex. 4 | LL/50 | NaH/0.03 | ODI/0.15 | EBS/0.25 | 157,000 |
| Ex. 5 | LL/50 | NaH/0.03; TEOS/0.07 | CO₂/0.02 | EBS/0.30 | 185,000 |
| Ex. 6 | LL/50 | NaH/0.03 | CO₂/0.15 | EBS/0.30 | 160,000 |
| Ex. 7 | CL/50 | NaH/0.05 | TDI/0.07 | EBS/0.52 | 175,000 |
| Ex. 8 | CL/50 | NaH/0.05 | TDI/0.03 | EBS/0.52 | 140,000 |
| Ex. 9 | CL/18.2; LL/31.8 | NaH/0.04 | TDI/0.05 | EBS/0.38 | 132,000 |
| Ex. 10 | CL/18.2; LL/31.8 | NaH/0.04 | CO₂/0.03 | EBS/0.38 | 125,000 |
| C. Ex. 1 | LL/50 | NaH/0.03 | - | EBS/0.30 | 45,000 |
| C. Ex. 2 | LL/50 | NaH/0.03 | TDI/0.04 | - | Gelated |

As can be seen from Table 1, a polyamide having a weight average molecular weight of 100,000 to 200,000 g/mole can be readily prepared using an activator having single or double active groups and a molecular weight modifier according to the process for preparing a polyamide according to an embodiment of the present invention. The weight average molecular weight of the prepared polyamides may be compared through a torque value (i.e., stirring load) as shown in Fig. 1.

### Industrial Applicability

The polyamide having an ultra-high molecular weight according to an embodiment of the present invention has excellent mechanical properties, particularly, impact resistance. Accordingly, the polyamide having an ultra-high molecular weight according to an embodiment of the present invention may be advantageously used as a material for parts selected from the group consisting of materials for automobiles, materials for electronic devices, materials for industrial pipes, materials for architectural and civil engineering, materials for 3D printers, textile materials, cloth materials, materials for machine tools, medical materials, aviation materials, solar materials, battery materials, materials for sports, materials for home appliances, materials for home use, and materials for cosmetics.

## Claims

1. A process for preparing a polyamide, which comprises subjecting a lactam to anionic polymerization in the presence of a polymerization catalyst, an activator, and a molecular weight modifier to prepare a polyamide having a weight average molecular weight of 100,000 to 200,000 g/mole, wherein the content of the activator is 0.002 to 20 parts by weight, and the content of the molecular weight modifier is 0.01 to 10 parts by weight, based on 100 parts by weight of the total lactam.

2. The process for preparing a polyamide of claim 1, wherein the lactam comprises at least one selected from the group consisting of laurolactam, caprolactam, piperidinone, pyrrolidone, enantolactam, and capryllactam.

3. The process for preparing a polyamide of claim 2, wherein the lactam is laurolactam, caprolactam, or a mixture thereof.

4. The process for preparing a polyamide of claim 2, wherein the lactam further comprises at least one selected from the group consisting of propiolactam, valerolactam, heptanolactam, octanolactam, nonanolactam, decanolactam, undecanolactam, and dodecanolactam.

5. The process for preparing a polyamide of claim 1, wherein the polymerization catalyst comprises, as an alkali metal, at least one selected from the group consisting of a metal hydride, a metal hydroxide, and a metal alkoxide.

6. The process for preparing a polyamide of claim 5, wherein the polymerization catalyst is a metal hydride, and the metal hydride is sodium hydride.

7. The process for preparing a polyamide of claim 1, wherein the polymerization catalyst further comprises a silica-based compound represented by Formula 1 below:
[Formula 1] Si-(R)n
in Formula 1, n is a natural number of 1 to 4, and R is at least one selected from hydrogen, alkyl, alkoxy, and aromatic, wherein the alkyl and the alkoxy each have 1 to 12 carbon atoms.

8. The process for preparing a polyamide of claim 7, wherein the silica-based compound comprises at least one selected from the group consisting of organic silicates, inorganic silicates, silane, silica, and silica gel.

9. The process for preparing a polyamide of claim 1, wherein the total content of the polymerization catalyst is 0.001 to 20 parts by weight based on 100 parts by weight of the total lactam.

10. The process for preparing a polyamide of claim 1, wherein the activator comprises at least one selected from the group consisting of carbon dioxide (CO₂), benzoyl chloride, N-acetyl caprolactam, N-acetyl laurolactam, and octadecyl isocyanate (ODI), each of which has a single active group, and toluene diisocyanate (TDI), hexamethylene diisocyanate (HDI), isophthaloyl-bis-laurolactam (IBL), and isophthaloyl-bis-caprolactam (ICL), each of which has dual active groups.

11. The process for preparing a polyamide of claim 10, wherein the activator is carbon dioxide, toluene diisocyanate, or octadecyl isocyanate.

12. The process for preparing a polyamide of claim 1, wherein the molecular weight modifier comprises at least one selected from the group consisting of ethylene-bis-stearamide (EBS), amine compounds, urea compounds, and di-urea compounds.

13. The process for preparing a polyamide of claim 12, wherein the molecular weight modifier is ethylene-bis-stearamide.

14. The process for preparing a polyamide of claim 1, wherein the anionic polymerization of the lactam is carried out for 0.5 to 180 minutes.

15. The process for preparing a polyamide of claim 1, wherein the anionic polymerization of the lactam is carried out in a temperature range of 180 to 300°C.

16. A polyamide prepared by the process of any one of claims 1 to 15 and having a weight average molecular weight of 100,000 to 200,000 g/mole.

17. The polyamide of claim 16, which is a material for parts selected from the group consisting of materials for automobiles, materials for electronic devices, materials for industrial pipes, materials for architectural and civil engineering, materials for 3D printers, textile materials, cloth materials, materials for machine tools, medical materials, aviation materials, solar materials, battery materials, materials for sports, materials for home appliances, materials for home use, and materials for cosmetics.
